# EUROPÄISCHE PATENTSCHRIFT

(11) **EP 2 867 971 B1**
(45) Veröffentlichungstag und Bekanntmachung des Hinweises auf die Patenterteilung: **19.02.2020**
(21) Anmeldenummer: 13732867.0
(22) Anmeldetag: 19.06.2013
(51) Int. Cl.: H02J 3/18

(54) **STEUERN EINER MEHRZAHL VON AN EINEN GEMEINSAMEN NETZÜBERGABEPUNKT ANGESCHLOSSENEN WECHSELRICHTERN**
CONTROL OF A PLURALITY OF INVERTERS CONNECTED TO A COMMON NETWORK INTERCONNECTION POINT
PROCESSUS DE COMMANDE D'UNE PLURALITÉ D'ONDULEURS RACCORDÉS À UN POINT COMMUN D'INJECTION DANS LE RÉSEAU

(30) Priorität: 28.06.2012 DE 102012105721
(43) Veröffentlichungstag der Anmeldung: 06.05.2015
(73) Patentinhaber: SMA Solar Technology AG, 34266 Niestetal (DE)
(72) Erfinder: FAWZY, Yehia Tarek, 34266 Niestetal (DE); PREMM, Daniel, 34260 Kaufungen (DE); SAKSCHEWSKI, Vitali, 34281 Gudensberg (DE); STEVENS, Stijn, 12489 Berlin (DE); TSCHENDEL, Christian, 34121 Kassel (DE)
(86) Internationale Anmeldenummer: PCT/EP2013/062760
(87) Internationale Veröffentlichungsnummer: WO 2014/001175

(56) Entgegenhaltungen:
- WO-A2-2008/128680
- US-B2- 7 606 638

## Beschreibung

### TECHNISCHES GEBIET DER ERFINDUNG

Die Erfindung bezieht sich auf ein Verfahren zum Steuern einer Mehrzahl von eingangsseitig an jeweils eine Stromquelle und ausgangsseitig an einen gemeinsamen Netzübergabepunkt angeschlossenen Wechselrichtern.

Spezieller bezieht sich die vorliegende Erfindung auf ein solches Verfahren, bei dem an den einzelnen Wechselrichtern elektrische Größen gemessen und zum Steuern der einzelnen Wechselrichter verwendet werden, wobei Anschlussanlagen zwischen den einzelnen Wechselrichtern und dem gemeinsamen Netzübergabepunkt berücksichtigt werden.

Die an die einzelnen Wechselrichter angeschlossenen Stromquellen können ganz unterschiedlicher Art sein. Es kann sich insbesondere um reine Generatoren handeln, wie beispielsweise Photovoltaikgeneratoren oder elektrische Maschinen, die von Windrädern oder Brennkraftmaschinen angetrieben werden, oder Brennstoffzellen. Weiterhin können die Stromquellen Speicher für elektrische Energie umfassen, insbesondere Batterien und elektrische Maschinen, die durch Schwungmassen, insbesondere Schwungräder, angetrieben werden, sowie Kombinationen von Wasserstoffspeichern und umkehrbaren Brennstoffzellen oder mit zusätzlichen Hydrolyseuren.

Eine an einen Wechselrichter angeschlossenen Stromquelle kann auch mehrere parallel oder in Reihe geschaltete Teilgeneratoren oder Teilspeicher für elektrische Energie aufweisen, wie dies zum Beispiel bei einem Photovoltaikgenerator mit mehreren zu Teilstrings in Reihe geschalteten Modulen und mehreren parallel geschalteten Teilstrings nicht unüblich ist.

### STAND DER TECHNIK

Betreiber von dezentralen Energieerzeugungsanlagen, die elektrische Energie an einem Netzübergabepunkt in ein öffentliches Stromnetz einspeisen, haben bei dieser Einspeisung in der Regel Vorgaben des Netzbetreibers einzuhalten, und zwar an dem Netzübergabepunkt. So reicht es insbesondere nicht aus, diese Vorgaben, beispielsweise hinsichtlich der zur Stabilisierung der Netzspannung einzuspeisenden Blindleistung, am Ausgang eines oder mehrerer Wechselrichter der jeweiligen Energieerzeugungsanlage zu erfüllen, weil dies keinesfalls damit gleichbedeutend ist, dass die Vorgaben auch an dem Netzübergabepunkt erfüllt werden. Ursachen hierfür sind zum Beispiel wechselseitige Beeinflussung der einzelnen Wechselrichter und insbesondere die Effekte von Anschlussanlagen, die die einzelnen Wechselrichter mit dem Netzübergabepunkt und damit auch untereinander verbinden. Die Anschlussanlagen können für unterschiedliche Wechselrichter einer Energieerzeugungsanlage höchst unterschiedliche Eigenschaften aufweisen, zum Beispiel dann, wenn die Anschlussanlagen räumlich weit verteilte Wechselrichter, wie sie bei Photovoltaikanlagen üblich sind, miteinander und mit dem Netzübergabepunkt verbinden.

Die wechselseitige Beeinflussung von Wechselrichtern kann insbesondere dann größere Bedeutung gewinnen, wenn die Wechselrichter und/oder die daran angeschlossenen Stromquellen stärker variieren. Dabei sind eine Stromquelle in Form eines reinen Generators einerseits und andererseits eine Stromquelle in Form eines Speichers für elektrische Energie, bei der der angeschlossene Wechselrichter nicht nur Strom ausgeben, sondern auch aufnehmen kann, nur ein Beispiel für eine solche Variation.

Aus den "Erläuterungen zu den Vorgaben der EnBW Regional AG zur Blindleistungs-Spannungskennlinie Q(U) für Erzeugungsanlagen am Mittelspannungsnetz (Stand 08/2011)" (http://www.enbw.eom/content/de/partner/_media/pdf/tab_mittelspannung/110808_QU_Standar d.pdf) ist es bekannt, dass dann, wenn eine Q(U)-Kennlinie gefordert ist, welche am Netzübergabepunkt zu realisieren ist, die Anschlussanlagen zwischen den Wechselrichtern und dem Netzübergabepunkt berücksichtigt werden müssen. Hierzu werden zwei Konzepte beschrieben. Das erste basiert auf Messungen am Netzübergabepunkt und dem Einbinden aller Wechselrichter in eine Regelschleife. Das andere basiert auf einer Hochrechnung von den Wechselrichtern auf den Netzübergabepunkt. Dazu wird ein Ersatzschaltbild der jeweiligen Anschlussanlage in den einzelnen Wechselrichtern abgelegt und zur derartigen Modifikation von Steuerkurven der Wechselrichter verwendet, dass der Effekt der jeweiligen Anschlussanlage bis zum Netzübergabepunkt kompensiert wird. Das Einbinden aller Wechselrichter in eine Regelschleife setzt, wenn dann, wenn Vorgaben am Netzübergabepunkt genau eingehalten werden sollen, schnelle Kommunikationsverbindungen zu dem Netzübergabepunkt und allen Wechselrichtern voraus. Die Hochrechnung von den einzelnen Wechselrichtern auf den Netzübergabepunkt erfordert zum selben Zweck detaillierte Informationen über alle Bestandteile der Anschlussanlagen und deren Vernetzung.

Aus der DE 10 2010 006 142 A1 ist ein Energieportal zur Steuerung bzw. Regelung einer Energieeinspeisung aus einem Erzeugernetz in ein Energieverteilungsnetz bekannt. Das Energieportal umfasst eine Betriebsparameter-Regelvorrichtung zum Steuern bzw. Regeln von Betriebsparametern des Erzeugernetzes auf der Grundlage von ausgewerteten Messgrößen, Einspeisefaktoren und Prognoseinformation mit den Einspeisefaktoren als Regelgröße. Die Betriebsparameter-Regelvorrichtung kann zum dynamischen Steuern bzw. Regeln von Blindleistungskompensation auf Basis von Messgrößen bezüglich Blindleistung des Erzeugernetzes ausgelegt sein.

Aus der DE 10 2009 030 725 A1 ist ein Windpark mit einer Vielzahl von Windenergieanlagen bekannt, deren erzeugte elektrische Energie an einem Übergabepunkt an ein elektrisches Stromnetz übergeben wird. Das öffentliche Stromnetz gibt Sollwerte für den Übergabepunkt vor, und ein Messfühler misst elektrische Istwerte am Übergabepunkt. Ein Masterregler ermittelt anhand einer Differenz zwischen Ober-Sollwerten und Ober-Istwerten auf einer ersten Regelebene eine Vorgabe für eine zweite Regelebene. Eine Mehrzahl von Submasterreglern auf der zweiten Regelebene nimmt die Vorgaben als Unter-Sollwerte und macht anhand einer Differenz zwischen dem Unter-Sollwert und einem Unter-Istwert Vorgaben für die Windenergieanlagen. Über alle Regelebenen hinweg besteht ein geschlossener Regelkreis zwischen dem Übergabepunkt und den Windenergieanlagen, dessen fehlerfreier Betrieb davon abhängt, dass den Regelmodulen die richtigen Istwerte zugeführt werden. Die Istwerte können direkt gemessen oder zumindest teilweise aus Messwerten an anderen Stellen berechnet werden, z. B. der für einen der Submasterregler relevante Istwert aus den Istwerten der ihm zugeordneten Windenergieanlagen. Für die Stabilität einer solchen kaskadenartig geschachtelten Regelung wird als vorteilhaft angesehen, wenn die unteren Regelebenen jeweils eine kleinere Zeitkonstante haben als die oberen Regelebenen. Der Submasterregler berücksichtigt bei seinen Vorgaben an die Windenergieanlagen für die Bereitstellung einer Menge an Blindleistung, dass die Windenergieanlagen in unterschiedlichem Abstand zu dem Übergabepunkt angeordnet sind, und passt die Vorgaben an die Windenergieanlagen entsprechend an. In dem bekannten Windpark sind Regelmodule vorgesehen, die wahlweise als Masterregler oder als Submasterregler einsetzbar sind.

Aus der US 7,606,638 B2 sind ein Windpark mit Blindleistungsregelung und ein Verfahren zu dessen Betrieb bekannt, dass die Merkmale des Oberbegriffs des unabhängigen Patentanspruchs 1 aufweist. Der Windpark umfasst mindestens zwei Windenergieanlagen, die über Verbindungsleitungen mit einer Hauptleitung verbunden sind, eine Verknüpfungsstelle, welche die Hauptleitung mit einem Energieübertragungsnetz verbindet, und einen Parkmaster, der zur Blindleistungsregelung ausgebildet ist und Kommunikationsleitungen zur Übermittlung von Steuersignalen an die Windenergieanlagen aufweist. Die Blindleistungsregelung ist als verteilter Regler ausgeführt. Er umfasst einen Oberregler am Parkmaster, der dazu ausgebildet ist, zur Einstellung eines globalen Leistungskoeffizienten der in das Energieübertragungsnetz abgegebenen Leistung eine Sollspannung zu ermitteln und als Signal über die Kommunikationsleitungen auszugeben, sowie einen Unterregler an den Windenergieanlagen, der jeweils dazu ausgebildet ist, aus dem Signal für die Sollspannung lokale Blindleistungssollwerte zu berechnen, die tatsächlich abgegebene Spannung der Windenergieanlage zu erfassen und nach Vergleich mit der Sollspannung die lokalen Blindleistungssollwerte zu korrigieren.

Aus der WO 2008/128680 A2 ist eine Windenergieanlage mit Blindleistungsvorgabe bekannt. Die Windenergieanlage umfasst einen Rotor, einen damit angetriebenen Generator mit einem Umrichter zur Einspeisung elektrischer Leistung über eine Verbindungsleitung in ein Netz und eine Steuereinrichtung. Die Steuereinrichtung umfasst eine Umrichtersteuerung, welche zur Kontrolle eines Blindleistungsanteils der Leistung gemäß einem Vorgabewert ausgebildet ist. Ein Primärsteuermodul ist zur Ausgabe eines Signals für eine Sollblindleistung vorgesehen, das zur stromgeführten Bestimmung der Sollblindleistung in Abhängigkeit von einem Stromflussmaß ausgebildet ist. Mit der Bestimmung der Sollblindleistung allein oder zumindest überwiegend abhängig von dem Strom - anstatt der Spannung oder einer Leistung - soll eine einfache Umsetzbarkeit mit guter Netzverträglichkeit kombiniert werden. Offenbart wird auch ein entsprechender Windpark mit einer Mehrzahl von Windenergieanlagen, die elektrische Energie zur Abgabe in das Netz erzeugen. Dabei ist ein Parkmaster zur Steuerung der in eine parkinterne Verbindungsleitung einspeisenden Energieanlagen vorgesehen. Der Parkmaster weist eine Blindleistungssteuerungseinrichtung auf, die ein Primärmodul zur Ausgabe eines Signals für eine Sollblindleistung umfasst, das zur stromgeführten Bestimmung der Sollblindleistung der Windenergieanlagen in Abhängigkeit von einem Stromflussmaß ausgebildet ist.

### AUFGABE DER ERFINDUNG

Der Erfindung liegt die Aufgabe zugrunde, ein Verfahren zum Steuern einer Mehrzahl von eingangsseitig an jeweils eine Stromquelle und ausgangsseitig an einen gemeinsamen Netzübergabepunkt angeschlossenen Wechselrichtern aufzuzeigen, mit dem Vorgaben am Netzübergabepunkt auch bei komplexen Anschlussanlagen genau eingehalten werden können, das aber dennoch gut ohne großen Aufwand umsetzbar ist.

### LÖSUNG

Die Aufgabe der Erfindung wird erfindungsgemäß durch ein Verfahren zum Steuern einer Mehrzahl von eingangsseitig an jeweils eine Stromquelle und ausgangsseitig an einen gemeinsamen Netzübergabepunkt angeschlossenen Wechselrichtern mit den Merkmalen der unabhängigen Patentansprüche gelöst. Bevorzugte Ausgestaltungen des Verfahrens sind den abhängigen Patentansprüchen zu entnehmen.

### BESCHREIBUNG DER ERFINDUNG

Bei einem erfindungsgemäßen Verfahren zum Steuern einer Mehrzahl von eingangsseitig an jeweils eine Stromquelle und ausgangsseitig an einen gemeinsamen Netzübergabepunkt angeschlossenen Wechselrichtern, bei dem an den einzelnen Wechselrichtern elektrische Größen gemessen und zum Steuern der einzelnen Wechselrichter verwendet werden, werden die Auswirkungen von Anschlussanlagen zwischen den einzelnen Wechselrichtern und dem gemeinsamen Netzübergabepunkt auf Ströme vermessen, die von den einzelnen Wechselrichtern in Abhängigkeit von den am Ort der einzelnen Wechselrichter gemessenen elektrischen Größen ausgegeben werden. Zu diesem Zweck werden elektrische Größen an dem Netzübergabepunkt gemessen und mit den zeitgleich an den einzelnen Wechselrichtern gemessenen elektrischen Größen in Beziehung gesetzt. Aus diesen Beziehungen wird abgeleitet, wie die Anschlussanlagen beim Steuern der einzelnen Wechselrichter zu berücksichtigen sind. Idealerweise erfolgt anschließend die Berücksichtigung so, dass sich die einzelnen Wechselrichter einschließlich ihrer Anschlussanlagen jeweils so verhalten, als wenn die Wechselrichter direkt, d. h. ohne zwischengeschaltete Anschlussanlagen, an den Netzübergabepunkt angeschlossen wären.

Bei dem erfindungsgemäßen Verfahren wird nicht versucht, die jeweiligen Anschlussanlagen in all ihren Bestandteilen und allen Details ihrer Vernetzung zu erfassen. Vielmehr konzentriert sich das erfindungsgemäße Verfahren darauf, die Auswirkungen der Anschlussanlagen zu erfassen, um diese Auswirkungen beim Steuern der einzelnen Wechselrichter zu kompensieren. Anders gesagt wird die Steuerung der einzelnen Wechselrichter bei dem erfindungsgemäßen Verfahren derart kalibriert, dass die einzelnen Wechselrichter in Bezug auf den Netzübergabepunkt ein gewünschtes Verhalten zeigen.

Eine sinnvolle Vermessung der Anschlussanlagen, d. h. auch eine sinnvolle Kompensation dieser Anschlussanlagen bzw. eine sinnvolle Kalibrierung der Steuerungen der einzelnen Wechselrichter setzt mehr als ein nur punktuelles Vermessen der Auswirkungen der Anschlussanlagen voraus. Vielmehr sollten diese Auswirkungen über die gesamten potentiellen Arbeitsbereiche der einzelnen Wechselrichter hinweg erfasst werden. Dazu werden diese Arbeitsbereiche der einzelnen Wechselrichter beim Vermessen der Auswirkungen der Anschlussanlagen möglichst vollständig abgefahren.

Dieses Abfahren der Arbeitsbereiche der Wechselrichter kann theoretisch dadurch erfolgen, dass ausreichend lange abgewartet wird, bis die Wechselrichter alle möglichen Arbeitspunkte einmal erreicht haben. Vorzugsweise wird jedoch jeweils mindestens ein Wechselrichter beim Vermessen der Auswirkungen der Anschlussanlagen, in Abhängigkeit mindestens einer anderen variablen externen Größe als den am Ort der einzelnen Wechselrichter gemessenen elektrischen Größen gesteuert, um seinen Arbeitsbereich beim Vermessen der Auswirkungen der Anschlussanlage zwangsweise abzufahren. Auf diese Weise wird das Vermessen der Anschlussanlagen erheblich verkürzt.

Erfindungsgemäß erfolgt das Vermessen der Anschlussanlagen dann, wenn die einzelnen Wechselrichter währenddessen nach einem vorgegebenen Vermessungsprogramm betrieben werden. Mit dem Vermessungsprogramm können nicht nur alle Arbeitspunkte der einzelnen Wechselrichter angefahren werden, die zur vollständigen Erfassung der Auswirkungen der Anschlussanlagen über ihre Arbeitsbereiche hinweg abgedeckt werden sollten, sondern es können auch verschiedene Arbeitspunktkonstellationen verschiedener Wechselrichter relativ zueinander, die die Auswirkungen der Anschlussanlagen der einzelnen Wechselrichter beeinflussen können, gezielt angefahren werden.

Konkret variiert das Vermessungsprogramm das Steuern der einzelnen Wechselrichter in Abhängigkeit von den am Ort der einzelnen Wechselrichter gemessenen elektrischen Größen. Auf diese Weise werden nicht nur verschiedene Arbeitspunkte der einzelnen Wechselrichter angefahren, sondern es kann auch direkt die Variation der Steuerung des einzelnen Wechselrichters durch Ausprobieren ermittelt werden, die dafür sorgt, dass er sich einschließlich seiner Anschlussanlagen so verhält, als wenn er ohne Anschlussanlagen direkt an den Netzübergabepunkt angeschlossen wäre. Um bei diesem Ausprobieren die Variationen der gemessenen elektrischen Größen an dem Netzübergabepunkt einer bestimmten Variation der Steuerung eines bestimmten Wechselrichters zuordnen zu können, wird gemäß dem Vermessungsprogramm das Steuern der einzelnen Wechselrichter getrennt voneinander variiert. Das heißt, es wird immer nur in die Steuerung eines Wechselrichters ändernd eingegriffen, während die Steuerungen aller anderen Wechselrichter unverändert bleiben. Damit die Auswirkungen der Anschlussanlagen der anderen Wechselrichter dabei jedoch möglichst realitätsnah abgebildet werden, ist es sinnvoll, die jeweils anderen Wechselrichter, bei denen das Steuern aktuell nicht variiert wird, an oder nahe ihrem Betriebspunkt bei den aktuellen Messwerten zu betreiben.

Auch die externen elektrischen Größen, die von den Wechselrichtern nicht bestimmt werden, können gemäß dem Messprogramm variiert werden, indem beispielsweise der Netzübergabepunkt für das Vermessen der Auswirkungen der Anschlussanlagen nicht an ein öffentliches Stromnetz angeschlossen wird, in das ansonsten mit den Wechselrichtern elektrische Energie eingespeist wird, sondern an einen variablen Verbraucher oder auch über einen variablen AC/AC-Wandler an ein öffentliches Stromnetz. Mit dem variablen Verbraucher oder dem variablen AC/AC-Wandler können dann externe elektrische Größen, wie sie sonst von dem öffentlichen Stromnetz vorgegeben werden, für das Vermessen der Auswirkungen der Anschlussanlagen simuliert werden.

In einer konkreten Ausführungsform des erfindungsgemäßen Verfahrens werden beim Steuern der einzelnen Wechselrichter in Abhängigkeit von den am Ort der einzelnen Wechselrichter gemessenen elektrischen Größen verwendete Steuerkurven in Abhängigkeit von mindestens einer am Ort der einzelnen Wechselrichter gemessenen elektrischen Größe modifiziert, um die zugehörigen Anschlussanlagen zu berücksichtigen. Insbesondere handelt es sich bei dieser zusätzlich berücksichtigten elektrischen Größe um eine interne elektrische Größe des jeweiligen Wechselrichters. So kann die von dem Wechselrichter aktuell ausgegebene Wirkleistung als Argument für eine Korrekturfunktion verwendet werden, mit der eine Steuerkurve modifiziert wird, um beispielsweise ohmsche Verluste aufgrund der Anschlussanlagen zu kompensieren. Auch weitere Einflüsse der Anschlussanlagen lassen sich durch eine von der aktuell eingespeisten Wirkleistung der einzelnen Wechselrichter durchgeführte Korrektur kompensieren. Dies gilt zum Beispiel für Steuerkurven, die beim Steuern der einzelnen Wechselrichter für die Abgabe von Blindleistung in Abhängigkeit von der von extern anliegenden Spannung oder für die Abgabe von Wirkleistung in Abhängigkeit von der Frequenz der von extern anliegenden Spannung verwendet werden.

Im Idealfall werden die Steuerkurven jedes einzelnen Wechselrichters so modifiziert, dass die Auswirkungen seiner Anschlussanlagen kompensiert werden. Da die Auswirkungen der einzelnen Anschlussanlagen bei einer Energieerzeugungsanlage mit vielen räumlich verteilten Wechselrichtern häufig sehr unterschiedlich sind, bedeutet dies, dass auch sehr unterschiedliche Variationen der Steuerkurven auftreten.

Es ist jedoch nicht immer sinnvoll zu versuchen, bei sämtlichen Wechselrichtern eine vollständige Kompensation ihrer Anschlussanlagen zu erreichen, d. h. alle Wechselrichter einschließlich ihrer Anschlussanlagen effektiv so zu betreiben, als seien die Wechselrichter ohne Anschlussanlagen direkt an den Netzübergabepunkt angeschlossen. Vielmehr kann es aufgrund sehr unterschiedlicher Anschlussanlagen sinnvoll sein, ein gewünschtes Kennlinienverhalten nur über die Gesamtheit der Wechselrichter hinweg zu realisieren. So können Wechselrichter, die eine höhere Impedanz für bestimmte elektrische Größen aufweisen als andere, beim Bereitstellen dieser elektrischen Größen ausgeklammert werden. Dies gilt beispielsweise für die Bereitstellung von Blindleistung durch sehr weit vom Netzübergabepunkt weg angeordneten Wechselrichtern mit entsprechend langen Anschlussanlagen.

Auch begrenzte Leitungsquerschnitte, über die mehrere Wechselrichter zu Gruppen zusammengefasst sind, können es sinnvoll machen, ein gewünschtes Kennlinienverhalten nicht mit allen Wechselrichtern gemeinsam, sondern nur mit ausgewählten Wechselrichtern bereitzustellen. Diese ausgewählten Wechselrichter müssen dann jedoch mit entsprechend steileren Steuerkurven gesteuert werden, da sie den Effekt auch für die nicht mit dieser Abhängigkeit angesteuerten Wechselrichter bereitstellen müssen. Dieses Konzept lässt sich auch so beschreiben, dass die beim Steuern der einzelnen Wechselrichter verwendeten Steuerkurven modifiziert werden, um mit sich ändernden an den einzelnen Wechselrichtern gemessenen elektrischen Größen angeforderte Änderungen von Einspeiseparametern am Netzübergabepunkt selektiv mittels solcher Wechselrichter vorzunehmen, mit denen diese Einspeiseparameter angesichts der Auswirkungen der Anschlussanlagen mit der höchsten Gesamteffizienz veränderbar sind.

Das erfindungsgemäße Vermessen der Anschlussanlagen bezüglich ihrer Auswirkungen auf die von den einzelnen Wechselrichtern ausgegebenen Ströme bis zum Netzübergabepunkt kann einmalig erfolgen, und entsprechende Ausrüstung kann anschließend abgebaut werden. Dies ist insbesondere dann sinnvoll, wenn die Messung der elektrischen Größen an dem Netzübergabepunkt auf der Sekundärseite eines Transformator, also beispielsweise auf einer Mittelspannungsebene stattfindet, da die dort zu verwendende Ausrüstung zwar einerseits erheblich aufwändiger und teurer als auf der Primärseite, also auf einer Niederspannungsebene, ist, andererseits aber ein direktes Vermessen der Auswirkungen auch des Transformators erlaubt. Streng genommen müssen die Anschlussanlagen nur dann erneut vermessen werden, wenn die Anschlussanlagen und/oder einer oder mehrerer der Wechselrichter und/oder eine oder mehrere der an die Wechselrichter angeschlossenen Stromquellen geändert wurden. Es kann aber durchaus sinnvoll sein, eine Kalibrierungseinrichtung permanent vorzuhalten, um die Kalibrierung fortlaufend - wenn auch mit einer viel geringeren Taktrate als diejenige, mit der die Steuerungen der einzelnen Wechselrichter arbeiten - zu aktualisieren.

Die an einzelnen Wechselrichter angeschlossenen Stromquellen können nicht nur reine Generatoren, wie beispielsweise PV-Generatoren oder elektrische Maschinen mit angeschlossenen Windrädern oder Brennkraftmaschinen oder Brennstoffzellen sein, sondern es kann sich auch um Speicher für elektrische Energie handeln. Hierzu zählen beispielsweise Batterien oder elektrische Maschinen mit abgeschlossenen Schwungmassen oder Wasserstoffspeicher mit umkehrbaren Brennstoffzellen oder mit Kombinationen von Brennstoffzellen und Hydrolyseuren. Weiterhin kann ein Speicher für elektrische Energie auch in Form einer großen elektrischen Kapazität ausgebildet sein. Es versteht sich, dass dann, wenn die Stromquellen auch Speicher für elektrische Energie umfassen, deren beim Vermessen der Anschlussanlagen zu berücksichtigenden Arbeitsbereiche auch die Fälle umfassen, in denen die Speicher elektrische Energie aufnehmen.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere der dargestellten relativen Anordnung mehrerer Bauteile zueinander sowie deren Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Wenn hingegen nur die genaue Anzahl eines Merkmals angegeben werden soll, findet das Adjektiv "genau" vor dem jeweiligen Merkmal Verwendung. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist eine schematische Darstellung einer Energieerzeugungsanlage mit mehreren Wechselrichtern.
- **Fig. 2**: ist eine vollständigere schematische Darstellung der Funktionsumgebung eines Wechselrichters der Energieerzeugungsanlage gemäß Fig. 1.
- **Fig. 3**: illustriert einen Messaufbau für ein erfindungsgemäßes Kalibrierungsverfahren, das an mehreren Energieerzeugungseinheiten, die an einen gemeinsamen Netzübergabepunkt angeschlossen sind, durchgeführt wird.
- **Fig. 4**: gibt eine Q(U)-Kennlinie einer der Energieerzeugungseinheiten gemäß Fig. 3 wieder.
- **Fig. 5**: gibt eine von der Wirkleistung der jeweiligen Energieerzeugungseinheit abhängige Korrekturspannung für die Anwendung der Kennlinie gemäß Fig. 4 wieder; und
- **Fig. 6**: gibt eine von der Wirkleistung der jeweiligen Energieerzeugungseinheit abhängige zusätzliche Korrekturblindleistung wieder, die ebenfalls bei der Umsetzung der Kennlinie gemäß Fig. 4 in einer Steuerkurve zu berücksichtigen ist.

### FIGURENBESCHREIBUNG

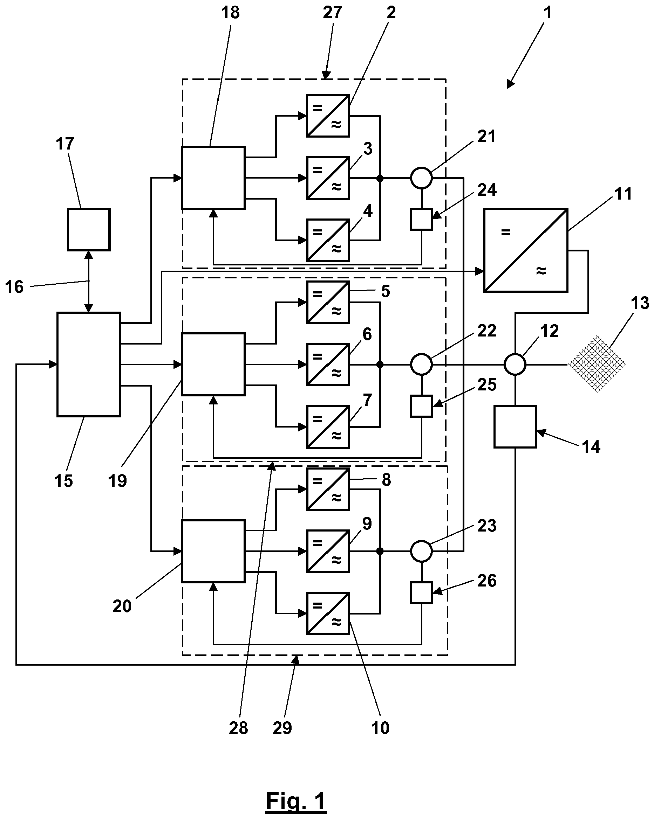

Die in **Fig. 1** dargestellte Energieerzeugungsanlage 1 weist mehrere Wechselrichter 2 bis 11 auf, die über einen gemeinsamen Netzübergabepunkt 12 an ein Wechselstromnetz 13 angeschlossen sind. Hier zeichnerisch nicht weiter differenzierte Messeinrichtungen 14 sind vorgesehen, um elektrische Größen einer kollektiven Gesamtstromausgabe aller Wechselrichter 2 bis 11 an dem Netzübergabepunkt 12 zu messen, wobei diese Messung auf Primär- und/oder Sekundärseite eines Transformators stattfinden kann, soweit ein solcher am Netzübergabepunkt 12 vorhanden ist. Insbesondere kann es sich hierbei um den Strom, der über den Netzübergabepunkt fließt, die Netzspannung, den Phasenwinkel zwischen Strom und Spannung und/oder die Frequenz des Wechselstromnetzes 13 handeln. Alternativ können auch andere elektrische Größen gemessen werden, die entsprechende Informationen enthalten. Die von den Messeinrichtungen 14 gemessenen elektrischen Größen stehen einer Hauptsteuereinrichtung 15 der Energieerzeugungsanlage zur Verfügung. Die Hauptsteuereinrichtung 15 vergleicht diese elektrischen Größen mit Vorgaben für die kollektive Gesamtstromausgabe über den Netzübergabepunkt 12. Diese Vorgaben können insbesondere Vorgaben für die Wirkleistung P, die Blindleistung Q, den Phasenwinkel cos ϕ und/oder die Asymmetrie des Einspeisestromes umfassen und von der Hauptsteuereinrichtung 15 mittels vorgegebener funktionaler Zusammenhänge aus den elektrischen Größen selbst abgeleitet werden. Alternativ können ihr die Vorgaben über eine Datenkommunikationsverbindung 16 von einer externen Stelle, insbesondere von einem Netzbetreiber 17 übermittelt werden, der das Wechselstromnetz 13 betreibt. Um die Vorgaben für die kollektive Gesamtstromausgabe umzusetzen, greift die Hauptsteuereinrichtung 15 zum einen in Gruppensteuereinrichtungen 18 bis 20, denen jeweils mehrere Wechselrichter 2 bis 4, 5 bis 7 bzw. 8 bis 10 unterstellt sind, und zum anderen direkt in eine hier nicht zeichnerisch separat dargestellte Steuereinrichtung des Wechselrichters 11 ein. Die Gruppensteuereinrichtungen erhalten von der Hauptsteuereinrichtung 15 beispielsweise eine Vorgabe für eine kollektive Gruppenstromausgabe ihrer Wechselrichter an dem Netzübergabepunkt 12 oder einem jeweiligen Gruppenübergabepunkt 21, 22 bzw. 23. Elektrische Größen der Gruppenstromausgabe an dem jeweiligen Gruppenübergabepunkt 21 bis 23 werden mit Messeinrichtungen 24 bis 26, die auf Primär- und/oder Sekundärseite eines optional am jeweiligen Gruppenübergabepunkt 21 bis 23 vorhandenen Transformators angesiedelt sind, gemessen und stehen der jeweiligen Gruppensteuereinrichtung 18 bis 20 zur Verfügung.

Damit die Gruppenstromausgaben den Vorgaben der Hauptsteuereinrichtung 15 entsprechen, greifen die Gruppensteuereinrichtungen 18 bis 20 in hier nicht separat dargestellte Steuereinrichtungen der Wechselrichter 2 bis 10 ein. Bei dieser Vorgehensweise kann die Hauptsteuereinrichtung 15 jede Gruppe 27 bis 29 von Wechselrichtern 2 bis 4, 5 bis 7 bzw. 8 bis 10 mit der zugehörigen Gruppensteuereinrichtung 18, 19 bzw. 20 und allen weiteren jeweils innerhalb eines mittels gestrichelter Linie umrandeten Kastens enthaltenen Komponenten als funktionale Einheit betrachten, von der sie nur die kollektiven Eigenschaften, beispielsweise in Form eines Gruppenkollektivfunktionsmodells, zu kennen braucht. Umgekehrt ist es auch möglich, dass die Hauptsteuereinrichtung 15 zwar direkt nur in die Gruppensteuereinrichtungen 18 bis 20 eingreift, um die Gruppenstromausgaben an den Gruppenübergabepunkten 21 bis 23 zu beeinflussen, aber dabei direkte Vorgaben für die einzelnen Wechselrichter 2 bis 10 macht, die von den Gruppensteuereinrichtungen 18 bis 20 nur noch umzusetzen sind. Dabei kann dann ein Gesamtmodell der Energieerzeugungsanlage 1 zur Anwendung kommen, das der Hauptsteuereinrichtung 15 zur Verfügung steht und alle Komponenten der Energieerzeugungsanlage 1 beschreibt, die sich auf die kollektive Gesamtstromausgabe an dem Netzübergabepunkt 12 auswirken. Im Bereich der einzelnen Gruppen 27 bis 29 bestehen entsprechende Variationsmöglichkeiten. Die Gruppensteuereinrichtungen 18 bis 20 können die einzelnen Wechselrichter 2 bis 10 einschließlich angeschlossener Stromquellen, Anschlussanlagen zwischen den Wechselrichtern und dem Gruppenübergabepunkt 21 oder dem Netzübergabepunkt 12 und einschließlich deren Steuereinrichtungen als funktionale Einheiten betrachten oder alle genannten Komponenten separat berücksichtigen.

In Fig. 1 sind die Wechselrichter 2 bis 4, 5 bis 7 und 8 bis 10 jeder Gruppe 27 bis 29 gleich dargestellt, und zwar sowohl bezüglich ihrer Anzahl innerhalb der jeweiligen Gruppe 27 bis 29 als auch bezüglich ihrer Ausbildung innerhalb der Gruppe und über alle Gruppen 27 bis 29 hinweg. Es ist jedoch zu betonen, dass die Anzahl der Wechselrichter der einzelnen Gruppen stark variieren kann und dass zwar grundsätzlich in den Gruppen 27 bis 29 gleiche Wechselrichter zusammengefasst sein können, dass aber die Wechselrichter jeder Gruppe auch unterschiedlich sein können. Konkret können in jeder Gruppe sowohl Wechselrichter mit Stromquellen in Form reiner Generatoren als auch Wechselrichter mit Stromquellen in Form von Speichern für elektrische Energie vorgesehen sein. So kann beispielsweise elektrische Energie von PV-Generatoren als Stromquellen einiger Wechselrichter einer Gruppe, die nicht konstant zur Verfügung steht, in Batterien oder anderen Speichern für elektrische Energie anderer Wechselrichter der Gruppe gepuffert werden. Im Idealfall steht damit von jeder Gruppe 27 bis 29 immer elektrische Energie für eine Stromausgabe an dem Netzübergabepunkt 12 in definiertem Umfang zur Verfügung. Um diese Ziel zu erreichen, können neben reinen Generatoren, die eine Quelle regenerativer Energie nutzen, auch reine Generatoren Verwendung finden, die beispielsweise mit einer Brennkraftmaschine auf fossile Energiequellen zurückgreifen. Ebenso können neben Batterien für eine mittel- bis langfristige Speicherung von elektrischer Energie auch Kondensatoren oder an elektrische Maschinen angeschlossene Schwungmassen für eine kurzfristigere Speicherung von elektrischer Energie eingesetzt werden. Für eine langfristigere Zwischenspeicherung von elektrischer Energie sind auch umkehrbare Brennstoffzellensystem verwendbar, die elektrische Energie in Form von Wasserstoff zwischenspeichern.

Der keiner Gruppensteuereinrichtung unterstellte Wechselrichter 11 gemäß Fig. 1 steht beispielhaft für eine große Energieerzeugungseinheit, die unmittelbar an den Netzübergabepunkt 12 angeschlossen sein kann, um dort kurzfristig auf kritische Netzereignisse zu reagieren und/oder Schwankungen der kollektiven Gesamtstromausgabe der Gruppen 27 bis 29 auszugleichen. Hierbei kann es sich beispielsweise um einen Wechselrichter handeln, der kurzfristig hohe Wirk- und/oder Blindleistung aus einer Großkapazität oder einem Schwungmassenspeicher abrufen kann oder der an eine Großbatterie als Stromquelle angeschlossen ist, oder um einen Wechselrichter, dessen Stromquelle eine elektrische Maschine mit einer angeschlossenen Brennkraftmaschine in Form eines großen Dieselmotors aufweist.

Im Betrieb der Energieerzeugungsanlage 1 gemäß Fig. 1 wird jedwedes zur Anwendung kommende Modell regelmäßig anhand der mit den Messeinrichtungen 14 und 24 bis 26 erfassten elektrischen Größen überprüft und ggf. aktualisiert. Solange die verwendeten Modelle auf diese Weise aktuell gehalten werden, ermöglichen sie es der sie verwendenden Hauptsteuereinrichtung 15 oder Gruppensteuereinrichtung 18 bis 20, die Erfüllung der jeweiligen Vorgabe für die kollektive Gesamtstromausgabe an dem Netzübergabepunkt 12 oder die Gruppenstromausgaben nach dem Konzept einer Feed Forward-Steuerung sicherzustellen. Selbst wenn dabei eine Überwachung des tatsächlich erzielten Ergebnisses erfolgt, kann diese Überwachung daher vergleichsweise langsam bleiben, ohne dass die Gefahr besteht, dass die elektrischen Größen der jeweiligen Stromausgabe zwischenzeitlich stärker abweichen. Innerhalb der untergeordneten funktionalen Einheiten, d. h. der Gruppen 27 bis 29 bzw. der Wechselrichter 2 bis 10, kann es aber sinnvoll sein, die Steuerung und auch eine Anpassung der Steuerung mit einer deutlich höheren Taktrate vorzunehmen. Dies gilt insbesondere dann, wenn die Stromquellen der Wechselrichter solche sind, bei denen sich - wie bei PV-Generatoren - auch kurzfristige erhebliche Schwankungen der zur Verfügung stehenden elektrischen Energie grundsätzlich nicht vermeiden lassen.

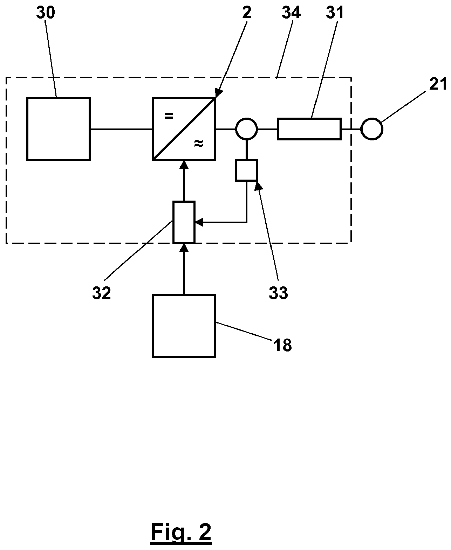

**Fig. 2** zeigt beispielhaft den Wechselrichter 2 gemäß Fig. 1 samt ihm zugeordneter Komponenten, die Einfluss auf seine Stromausgabe an den Gruppenübergabepunkt 21 haben und die in Fig. 1 nicht separat dargestellt sind. Hierzu zählen die Stromquelle 30, an die der Wechselrichter 2 eingangsseitig angeschlossen ist, die Anschlussanlage 31, die den Wechselrichter an den Gruppenübergabepunkt 21 anschließt, die Steuereinrichtung 32 des Wechselrichters und Messeinrichtungen 33 für elektrische Größen einer Stromausgabe des Wechselrichters 2 an seinem Ausgang. Die Gruppensteuereinrichtung 18 kann den Wechselrichter 2 einschließlich dieser und anderer sich auf die Stromausgabe des Wechselrichter 2 auswirkenden Faktoren als funktionale Einheit 34 betrachten und über ein Einzelfunktionsmodell dieser funktionalen Einheit 34 hinaus nicht weiter berücksichtigen. Umgekehrt kann die Gruppensteuereinrichtung 18 die Berücksichtigung der genannten Komponenten selbst vornehmen und Steuerbefehle an die Steuereinrichtung 32 geben, die von dieser unmittelbar umzusetzen sind.

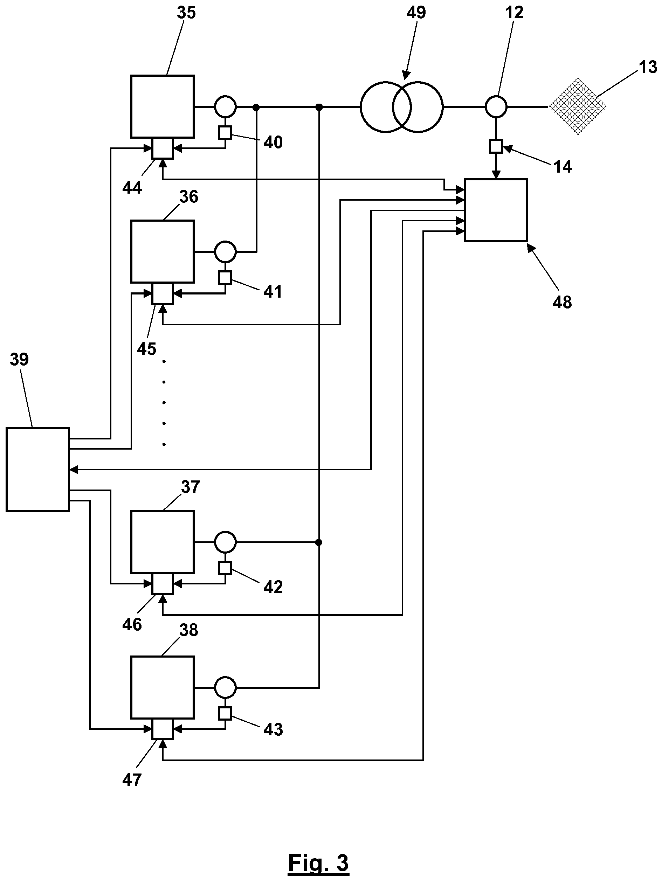

Die Eigenschaften der Anschlussanlagen, über die die einzelnen Wechselrichter 2 bis 11 an den Netzübergabepunkt 12 und ggf. an die Gruppenübergabepunkte 21 bis 23 angeschlossen sind, können aufgrund der einzelnen Komponenten dieser Anschlussanlagen theoretisch modelliert, d. h. berechnet werden. Vielfach sind die Anschlussanlagen jedoch bezüglich ihrer Komponenten nicht in allen Details vollständig bekannt, oder sie sind aufgrund einer Vielzahl von Komponenten und Verknüpfung oder Vermaschung derselben nur schwer oder gar nicht theoretisch zu modellieren, was auch eine Folge der über die Anschlussanlagen miteinander verknüpften Vielzahl von Wechselrichtern sein kann, die sich gegenseitig beeinflussen. Um dennoch mit Vorgaben für die Stromausgaben der einzelnen Wechselrichter oder auch mit Vorgaben für die Gruppenstromausgaben der Gruppen dieser Wechselrichter definiert Einfluss auf die kollektive Gesamtstromausgabe am Netzübergabepunkt 12 gemäß Fig. 1 ausüben zu können, kann eine Kalibrierung durchgeführt werden, für die ein Messaufbau in **Fig. 3** dargestellt ist. Fig. 3 zeigt eine Mehrzahl von Energieerzeugungseinheiten 35 bis 38, die über den gemeinsamen Netzübergabepunkt 12 an das Wechselstromnetz 13 angeschlossen sind. Die Energieerzeugungseinheiten 35 bis 38 können Wechselrichter 2 bis 11 oder Gruppen von Wechselrichtern 27 bis 29 gemäß Fig. 1 sein, und sie können einer übergeordneten Steuereinrichtung 39, d. h. einer der Gruppensteuereinrichtungen 18 bis 20 oder der Hauptsteuereinrichtung 15 gemäß Fig. 1 unterstellt sein. Jede Energieerzeugungseinheit 35 bis 38 weist Messeinrichtungen 40 bis 43 für ihre Stromausgabe und eine Steuereinrichtung 44 bis 47 auf. Eine Kalibrierungseinrichtung 48 wird vorübergehend für die Kalibrierung der Anschlussanlagen der Energieerzeugungseinheiten 35 bis 38 vorgesehen, oder sie ist dauerhaft vorhanden, um auch ein regelmäßiges Nachkalibrieren zu ermöglichen. Als Beispiel für eine Komponente der Anschlussanlagen der Energieerzeugungseinheiten 35 bis 38 an den Netzübergabepunkt 12, die zu deren Komplexität beiträgt, ist in Fig. 3 ein Transformator 49 dargestellt.

Über die Messeinrichtungen 14 erfasst die Kalibrierungseinrichtung 48 die elektrischen Größen der kollektiven Gesamtstromausgabe an dem Netzübergabepunkt 12 und gleicht sie mit den von den Messeinrichtungen 40 bis 43 gemessenen elektrischen Größen der Stromausgaben der einzelnen Energieerzeugungseinheiten 35 bis 38 ab. Um auf diese Weise den Effekt der Anschlussanlagen einzelner Energieerzeugungseinheiten 35 bis 38 auflösen zu können, greift die Kalibrierungsvorrichtung 48 in die Steuereinrichtungen 44 bis 47 entweder direkt oder über die übergeordnete Steuereinrichtung 39 ein. So kann sie beispielsweise für eine definierte Modulation des Betriebs einer der Energieerzeugungseinheiten 35 bis 38 sorgen, während der Betrieb der anderen Energieerzeugungseinheiten konstant gehalten wird. Es versteht sich, dass die entsprechenden Verfahrensschritte für jede der Energieerzeugungseinheiten 35 bis 38 durchgeführt werden. Zudem kann die Kalibrierungseinrichtung 48 die Energieerzeugungseinheiten 35 bis 38 gezielt auf unterschiedliche elektrische Größen ihrer Stromausgaben ansteuern, und zwar sowohl kollektiv als auch einzeln, um alle Betriebszustände, die bei dem Kollektiv der Energieerzeugungseinheiten 35 bis 38 möglicherweise auftreten, zu berücksichtigen. Aus den so gewonnenen Messwerten leitet die Kalibrierungseinrichtung 48 Modelle der Anschlussanlagen der einzelnen Energieerzeugungseinheiten an den Netzübergabepunkt 12 ab, die an die Steuereinrichtungen 44 bis 47 oder die übergeordnete Steuereinrichtung 39 übermittelt werden, damit sie dort zukünftige Berücksichtigung finden können.

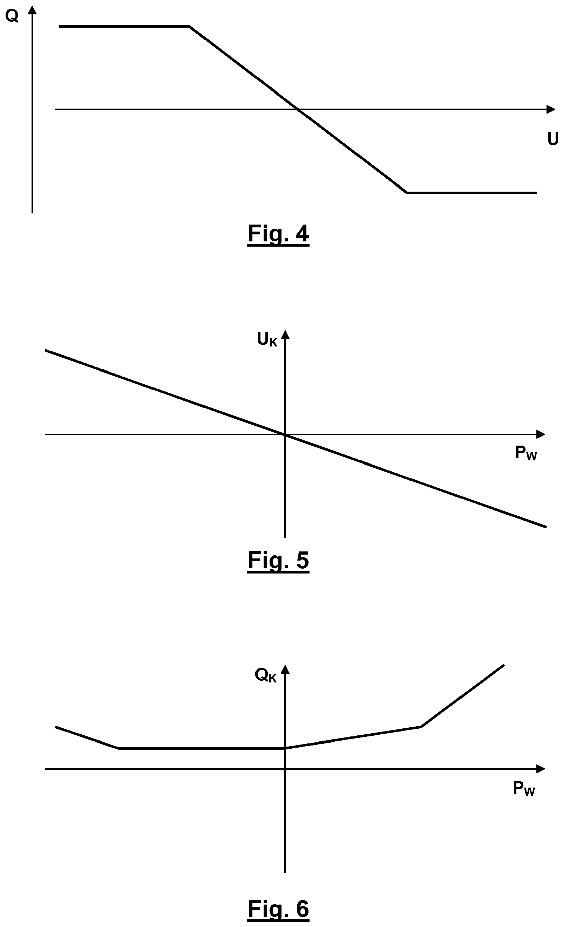

Eine Möglichkeit, die Kalibrierung gemäß Fig. 3 in den Steuereinrichtungen 44 bis 47 der Energieerzeugungseinheiten 35 bis 38 umzusetzen, wird anhand der folgenden **Fig. 4 bis 6** erläutert. Es ist eine bekannte Maßnahme zur Stützung der Spannung in Wechselstromnetzen, dass angeschlossene Energieerzeugungsanlagen Blindleistung Q in Abhängigkeit von der an ihrem Netzübergabepunkt anliegenden Netzspannung U einspeisen. Fig. 4 zeigt eine entsprechende Q(U)-Kennlinie, wobei Q einen relativen Blindleistungsanteil der eingespeisten Leistung und U die Netzspannung in Arbeitseinheiten wiedergibt. Wenn die Gesamtstromausgabe am Netzübergabepunkt dieser Kennlinie folgen soll, reicht es aufgrund der Eigenschaften der Anschlussanlagen der einzelnen Energieerzeugungseinheiten an dem Netzübergabepunkt nicht aus, diese Kennlinie ohne Anpassung an den Energieerzeugungseinheiten umzusetzen. Vielmehr muss die Kennlinie in jeder Energieerzeugungseinheit kalibriert werden, um der Anschlussanlage der jeweiligen Energieerzeugungseinheit Rechnung zu tragen. Diese Kalibrierung besteht zumindest in der Berücksichtigung einer Korrekturspannung U_{K}, die von der von der jeweiligen Energieerzeugungseinheit eingespeisten Wirkleistung P_{W} abhängig ist, wobei vielfach eine lineare Abhängigkeit angesetzt werden kann, wie sie in Fig. 5 dargestellt ist. Diese Korrekturspannung U_{K} berücksichtigt im Kern Spannungsabfälle zwischen der jeweiligen Energieerzeugungseinheit und dem Netzübergabepunkt aufgrund von ohmschen Widerständen.

Darüber hinaus erweist es sich als sachdienlich, die Kennlinie gemäß Fig. 4 auch noch um eine von der eingespeisten Wirkleistung P_{W} abhängige Korrekturblindleistung Q_{K} zu korrigieren, für die ein möglicher, durch verschiedene Stützwerte bestimmter Verlauf in Fig. 6 dargestellt ist. Weitere Korrekturen können zur vollständigen Berücksichtigung der jeweiligen Anschlussanlage nötig sein. Die Kalibrierung der Kennlinie gemäß Fig. 4 zur Kompensation der Anschlussanlagen der jeweiligen Energieerzeugungseinheit führt dazu, dass die jeweilige Energieerzeugungseinheit nicht mehr mit Hilfe einer statischen Steuerkurve angesteuert werden kann, die eine feste Kennlinie widerspiegelt. Vielmehr führen die verschiedenen notwendigen Korrekturen in einer zweidimensionalen Darstellung zu einem Bündel von Kennlinien oder einer durch einen drei- oder mehrdimensionalen Raum verlaufenden zwei- oder mehrdimensionalen Steuerfläche. Praktisch kann jedoch die Steuerkurvensteuerung der Energieerzeugungseinheiten beibehalten werden, wenn die Eingabe- und Ausgabewerte der Steuerkurve zusätzlich modifiziert werden, soweit eine Modifikation des zweidimensionalen Verlaufs der Steuerkurve allein nicht ausreicht.

### BEZUGSZEICHENLISTE

- 1: Energieerzeugungsanlage
- 2: Wechselrichter
- 3: Wechselrichter
- 4: Wechselrichter
- 5: Wechselrichter
- 6: Wechselrichter
- 7: Wechselrichter
- 8: Wechselrichter
- 9: Wechselrichter
- 10: Wechselrichter
- 11: Wechselrichter
- 12: Netzübergabepunkt
- 13: Wechselstromnetz
- 14: Messeinrichtungen
- 15: Hauptsteuereinrichtung
- 16: Kommunikationsverbindung
- 17: Netzbetreiber
- 18: Gruppensteuereinrichtung
- 19: Gruppensteuereinrichtung
- 20: Gruppensteuereinrichtung
- 21: Gruppenübergabepunkt
- 22: Gruppenübergabepunkt
- 23: Gruppenübergabepunkt
- 24: Messeinrichtungen
- 25: Messeinrichtungen
- 26: Messeinrichtungen
- 27: Gruppe
- 28: Gruppe
- 29: Gruppe
- 30: Stromquelle
- 31: Anschlussanlage
- 32: Steuereinrichtung
- 33: Messeinrichtungen
- 34: funktionale Einheit
- 35: Energieerzeugungseinheit
- 36: Energieerzeugungseinheit
- 37: Energieerzeugungseinheit
- 38: Energieerzeugungseinheit
- 39: übergeordnete Steuereinrichtung
- 40: Messeinrichtungen
- 41: Messeinrichtungen
- 42: Messeinrichtungen
- 43: Messeinrichtungen
- 44: Steuereinrichtung
- 45: Steuereinrichtung
- 46: Steuereinrichtung
- 47: Steuereinrichtung
- 48: Kalibrierungseinrichtung
- 49: Transformator

## Patentansprüche

1. Verfahren zum Steuern einer Mehrzahl von eingangsseitig an jeweils eine Stromquelle (30) und ausgangsseitig an einen gemeinsamen Netzübergabepunkt (12) angeschlossenen Wechselrichtern (2 bis 11),
- wobei an den einzelnen Wechselrichtern (2 bis 11) elektrische Größen gemessen und zum Steuern der einzelnen Wechselrichter (2 bis 11) verwendet werden,
- wobei Anschlussanlagen (31) zwischen den einzelnen Wechselrichtern (2 bis 11) und dem gemeinsamen Netzübergabepunkt (12) beim Steuern der einzelnen Wechselrichter (2 bis 11) berücksichtigt werden und
- wobei elektrische Größen an dem Netzübergabepunkt (12) gemessen werden, **dadurch gekennzeichnet, dass** Auswirkungen der Anschlussanlagen (31) zwischen den einzelnen Wechselrichtern (2 bis 11) und dem gemeinsamen Netzübergabepunkt auf Ströme vermessen werden, die von den einzelnen Wechselrichtern (2 bis 11) in Abhängigkeit von den am Ort der einzelnen Wechselrichter (2 bis 11) gemessenen elektrischen Größen ausgegeben werden,
- wobei die an dem Netzübergabepunkt (12) gemessen elektrische Größen mit den zeitgleich an den einzelnen Wechselrichtern (2 bis 11) gemessenen elektrischen Größen in Beziehung gesetzt werden, indem die Wechselrichter (2 bis 11) nach einem vorgegebenen Vermessungsprogramm betrieben werden, gemäß dem das Steuern der einzelnen Wechselrichter (2 bis 11) in Abhängigkeit von den am Ort der einzelnen Wechselrichter (2 bis 11) gemessenen elektrischen Größen getrennt voneinander variiert wird, um Variationen der gemessenen elektrischen Größen an dem Netzübergabepunkt (12) einer bestimmten Variation der Steuerung eines bestimmten Wechselrichters (2 bis 11) zuordnen zu können.

2. Verfahren nach Anspruch 1, **dadurch gekennzeichnet, dass** beim Vermessen der Auswirkungen der Anschlussanlagen (31) potentielle Arbeitsbereiche der Wechselrichter (2 bis 11) abgefahren werden.

3. Verfahren nach Anspruch 1 oder 2, **dadurch gekennzeichnet, dass** mindestens ein Wechselrichter (2 bis 11) beim Vermessen der Auswirkungen der Anschlussanlagen (31) in Abhängigkeit mindestens einer anderen variablen externen Größe als den am Ort der einzelnen Wechselrichter (2 bis 11) gemessenen elektrischen Größen gesteuert wird.

4. Verfahren nach einem der vorhergehenden Ansprüche, **dadurch gekennzeichnet, dass** die jeweils anderen Wechselrichter (2 bis 11), bei denen das Steuern aktuell nicht variiert wird, an oder nahe ihrem Betriebspunkt bei den aktuellen Messwerten betrieben werden.

5. Verfahren nach einem der vorhergehenden Ansprüche, **dadurch gekennzeichnet, dass** beim Steuern der einzelnen Wechselrichter (2 bis 11) in Abhängigkeit von den am Ort der einzelnen Wechselrichter (2 bis 11) gemessenen elektrischen Größen verwendete Steuerkurven in Abhängigkeit von mindestens einer am Ort der einzelnen Wechselrichter (2 bis 11) gemessenen elektrischen Größe modifiziert werden, um die zugehörigen Anschlussanlagen (31) zu berücksichtigen.

6. Verfahren nach Anspruch 5, **dadurch gekennzeichnet, dass** beim Steuern der einzelnen Wechselrichter (2 bis 11) verwendete Steuerkurven in Abhängigkeit von mindestens einer internen elektrischen Größe des jeweiligen Wechselrichters (2 bis 11) modifiziert werden, um die zugehörigen Anschlussanlagen (31) zu berücksichtigen.

7. Verfahren nach Anspruch 6, **dadurch gekennzeichnet, dass** Steuerkurven, die beim Steuern der einzelnen Wechselrichter (2 bis 11) für die Abgabe von Blindleistung in Abhängigkeit von der von extern anliegenden Spannung oder für die Abgabe von Wirkleistung in Abhängigkeit von der Frequenz der von extern anliegenden Spannung verwendet werden, in Abhängigkeit von der von dem jeweiligen Wechselrichter (2 bis 11) eingespeisten Wirkleistung modifiziert werden, um die zugehörigen Anschlussanlagen (31) zu berücksichtigen.

8. Verfahren nach einem der Ansprüche 5 bis 7, **dadurch gekennzeichnet, dass** die beim Steuern der einzelnen Wechselrichter (2 bis 11) verwendeten Steuerkurven modifiziert werden, um die Auswirkungen der Anschlussanlagen (31) der einzelnen Wechselrichter (2 bis 11) individuell zu kompensieren.

9. Verfahren nach einem der Ansprüche 5 bis 7, **dadurch gekennzeichnet, dass** die beim Steuern der einzelnen Wechselrichter (2 bis 11) verwendeten Steuerkurven modifiziert werden, um mit sich ändernden an den einzelnen Wechselrichtern (2 bis 11) gemessenen externen elektrischen Größen angeforderte Änderungen von Einspeiseparametern am Netzübergabepunkt selektiv mittels solcher Wechselrichter (2 bis 11) vorzunehmen, mit denen diese Einspeiseparameter angesichts der Auswirkungen der Anschlussanlagen (31) mit der höchsten Gesamteffizienz veränderbar sind, wobei die Änderungen von Einspeiseparametern am Netzübergabepunkt optional nur mit solchen Wechselrichtern (2 bis 11) vorgenommen werden, mit denen diese Einspeiseparameter angesichts der Auswirkungen der Anschlussanlagen mit der höchsten Gesamteffizienz veränderbar sind.

10. Verfahren nach einem der vorhergehenden Ansprüche, **dadurch gekennzeichnet, dass** die Anschlussanlagen (31) nur dann erneut vermessen werden, wenn die Anschlussanlagen und/oder einer oder mehrere der Wechselrichter und/oder eine oder mehrere der an die Wechselrichter angeschlossenen Stromquellen geändert wurden.

11. Verfahren nach einem der vorhergehenden Ansprüche, **dadurch gekennzeichnet, dass** die elektrischen Größen an dem Netzübergabepunkt (12) auf der Sekundärseite eines die Wechselrichter (2 bis 11)mit einem Wechselstromnetz (13) verbindenden Transformators (49) gemessen werden.

12. Verfahren nach einem der vorhergehenden Ansprüche, **dadurch gekennzeichnet, dass** die an die Wechselrichter (2 bis 11) angeschlossenen Stromquellen (30) Generatoren, optional PV-Generatoren oder elektrische Maschinen mit angeschlossenen Windrädern oder Brennkraftmaschinen oder Brennstoffzellen, und Speicher für elektrische Energie, optional Batterien oder elektrische Maschinen mit angeschlossenen Schwungmassen oder Wasserstoffspeicher mit umkehrbaren Brennstoffzellen oder mit Kombinationen von Brennstoffzellen und Hydrolyseuren, umfassen.

## Claims

1. A method of controlling a plurality of inverters (2 to 11), which are connected to a current source (30) each on their input side and to a common grid connection point (12) on their output side,
- wherein electrical variables are measured at the individual inverters (2 to 11) and used to control the individual inverters (2 to 11),
- wherein connection equipment (31) are taken into consideration when controlling the individual inverters (2 to 11), and
- wherein electrical variables are measured at the common grid connection point (12), **characterized in that** effects of the connection equipment (31) between the individual inverters (2 to 11) and the common grid connection point (12) on currents are determined, said currents being output by the individual inverters (2 to 11) as a function of the electrical variables measured at the individual inverters (2 to 11),
- wherein the electrical variables measured at the common grid connection point (12) and the electrical variables measured at the individual inverters (2 to 11) are set in relation to each other by operating the inverters (2 to 11) according to a preset measurement program, the preset measurement program comprising individually varying the controlling of the individual inverters (2 to 11) depending on the electrical variables measured at the individual inverters (2 to 11), such that variations of the electrical variables measured at the common grid connection point (12) may be associated with a distinct variation of the controlling of a distinct inverter (2 to 11).

2. The method of claim 1, **characterized in that** determining the effects of the connection equipment (31) comprises covering potential operating ranges of the inverters (2 to 11).

3. The method of claim 1 or 2, **characterized in that** determining the effects of the connection equipment (31) comprises controlling at least one of the plurality of inverters (2 to 11) depending on at least one other variable external variable than the electrical variables measured at the location of the individual inverters (2 to 11).

4. The method of one of the preceding claims, **characterized in that** the respective other inverters (2 to 11), for which the controlling is currently not varied, are operated at or close to their operating point according to the current measurement values.

5. The method of one of the preceding claims, **characterized in that** control curves, which are used in controlling the individual inverters (2 to 11) as a function of at least one electrical variable measured at the individual inverters (2 to 11), are modified depending on the electrical variables measured at the location of the individual inverters (2 to 11) in order to take the associated connection equipment (31) into consideration.

6. The method of claim 5, **characterized in that** control curves used in controlling the individual inverters (2 to 11) are modified as a function of at least one internal electrical variable of the respective inverter (2 to 11) in order to take the associated connection equipment (31) into consideration.

7. The method of claim 6, **characterized in that** control curves which are used in controlling the individual inverters (2 to 11) for outputting reactive power as a function of the externally applied voltage or for outputting active power as a function of the frequency of the voltage applied externally, are modified depending on the active power fed by the respective inverter (2 to 11) in order to take the associated connection equipment (31) into consideration.

8. The method of claim 7, **characterized in that** the control curves used in controlling the individual inverters (2 to 11) are modified in order to individually compensate for the effects of the connection equipment (31) of the individual inverter (2 to 11).

9. The method of claims 8, wherein the control curves used in controlling the individual inverters (2 to 11) are modified in order to make changes to feed parameters at the grid connection point (31) as demanded by changing external electrical variables measured at the individual inverters (2 to 11) selectively by means of such inverters (2 to 11), with which these feed parameters can be changed in respect of the effects of the connection equipment (31) with the highest total efficiency, wherein the changes to feed parameters at the grid connection point (12) optionally are made exclusively by means of such inverters (2 to 11), with which these feed parameters can be changed in respect of the effects of the connection equipment (31) with the highest total efficiency.

10. The method of one of the preceding claims, **characterized in that** the connection equipment (31) are measured again only when the connection equipment (31) and/or one or more of the inverters (2 to 11) and/or one or more of the current sources connected to the inverters (2 to 11) has been changed.

11. The method of one of the preceding claims, **characterized in that** the electrical variables are measured at the grid connection point (12) on a secondary side of a transformer (49) connecting the inverters (2 to 11) to an AC grid (13).

12. The method one of the preceding claims, **characterized in that** the current sources (30) connected to the inverters (2 to 11) comprise generators, optionally PV generators or electrical machines with connected windwheels, or internal combustion engines or fuel cells, and storage systems for electrical energy, optionally batteries or electric machines with connected flywheel masses or hydrogen stores with reversible fuel cells or with combinations of fuel cells and hydrolyzers.

## Revendications

1. Procédé de commande d'une pluralité d'ondulateurs (2 à 11) respectivement raccordés du côté d'entrée à une source de courant (30) et du côté de sortie à un point commun d'injection dans le réseau (12) ;
- des grandeurs électriques étant mesurées au niveau des ondulateurs individuels (2 à 11) et étant utilisées pour commander les ondulateurs individuels (2 à 11) ;
- les installations de raccordement (31) entre les ondulateurs individuels (2 à 11) et le point commun d'injection dans le réseau (12) étant prises en compte lors de la commande des ondulateurs individuels (2 à 11) ; et
- les grandeurs électriques étant mesurées au niveau du point d'injection dans le réseau (12) ;
**caractérisé en ce que** les incidences des installations de raccordement (31) se trouvant entre les ondulateurs individuels (2 à 11) et le point commun d'injection dans le réseau sont mesurées via les courants provenant des ondulateurs individuels (2 à 11) en fonction des grandeurs électriques mesurées à l'endroit des ondulateurs individuels (2 à 11) ;
- les grandeurs électriques mesurées au niveau du point d'injection dans le réseau (12) étant mises en relation avec les grandeurs électriques mesurées en même temps au niveau des ondulateurs individuels (2 à 11) en entraînant les ondulateurs (2 à 11) selon un programme de mesure prédéterminé selon lequel la commande des ondulateurs individuels (2 à 11) varie différemment en fonction des grandeurs électriques mesurées à l'endroit des ondulateurs individuels (2 à 11), pour pouvoir associer les variations des grandeurs électriques mesurées au point d'injection dans le réseau (12) à une variation définie de la commande d'un ondulateur (2 à 11) défini.

2. Procédé selon la revendication 1, **caractérisé en ce que** lors de la mesure des incidences des installations de raccordement (31), des plages potentielles de travail des ondulateurs (2 à 11) sont retirées.

3. Procédé selon la revendication 1 ou 2, **caractérisé en ce que** lors de la mesure des incidences des installations de raccordement (31), au moins un ondulateur (2 à 11) est commandé en fonction d'au moins une grandeur externe variable autre que les grandeurs électriques mesurées sur place au niveau des ondulateurs individuels (2 à 11).

4. Procédé selon l'une quelconque des revendications précédentes, **caractérisé en ce que** les respectivement autres ondulateurs (2 à 11) pour lesquels la commande ne varie actuellement pas sont entraînés au niveau de leur point de fonctionnement ou à proximité de celui-ci, dans les valeurs actuelles de mesure.

5. Procédé selon l'une quelconque des revendications précédentes, **caractérisé en ce que** lors de la commande des ondulateurs individuels (2 à 11), les courbes de commande utilisées par les grandeurs électriques mesurées sur place au niveau des ondulateurs individuels (2 à 11) sont modifiées en fonction d'au moins une grandeur électrique mesurée sur site au niveau des ondulateurs individuels (2 à 11), pour prendre en compte les installations de raccordement (31) associées.

6. Procédé selon la revendication 5, **caractérisé en ce que** les courbes de commande utilisées lors de la commande des ondulateurs individuels (2 à 11) varient en fonction d'au moins une grandeur électrique interne de l'ondulateur (2 à 11) respectif pour prendre en compte les installations de raccordement (31) associées.

7. Procédé selon la revendication 6, **caractérisé en ce que** lors de la commande des ondulateurs individuels (2 à 11), les courbes de commande utilisées pour le prélèvement de la puissance réactive en fonction de la tension présente à l'extérieur ou pour le prélèvement de la puissance active en fonction de la fréquence de la tension présente à l'extérieur sont modifiées en fonction de la puissance active accumulée par l'ondulateur (2 à 11) respectif, pour prendre en compte les installations de raccordement (31) associées.

8. Procédé selon l'une quelconque des revendications 5 à 7, **caractérisé en ce que** les courbes de commande utilisées lors de la commande des ondulateurs individuels (2 à 11) sont modifiées pour compenser individuellement les incidences des installations de raccordement (31) des ondulateurs individuels (2 à 11).

9. Procédé selon l'une quelconque des revendications 5 à 7, **caractérisé en ce que** lors de la commande des ondulateurs individuels (2 à 11), les courbes de commande utilisées sont modifiées pour effectuer les modifications requises avec les grandeurs électriques externes mesurées variant au niveau des ondulateurs individuels (2 à 11) pour les paramètres d'alimentation au point d'injection dans le réseau au choix à l'aide d'ondulateurs (2 à 11) permettant de faire varier ces paramètres d'alimentation, compte tenu des incidences des installations de raccordement (31), avec la plus grande efficacité totale possible, les modifications des paramètres d'alimentation au point d'injection dans le réseau étant uniquement réalisées en option avec les ondulateurs (2 à 11) pour lesquels ces paramètres d'alimentation peuvent être modifiés avec la plus grande efficience totale en tenant compte des incidences des installations de raccordement.

10. Procédé selon l'une quelconque des revendications précédentes, **caractérisé en ce que** les installations de raccordement (31) sont uniquement mesurées lorsque les installations de raccordement et/ou un ou plusieurs des ondulateurs et/ou une ou plusieurs des sources de courant raccordées aux ondulateurs sont modifiés.

11. Procédé selon l'une quelconque des revendications précédentes, **caractérisé en ce que** les grandeurs électriques sont mesurées au point d'injection dans le réseau (12) sur le côté secondaire d'un transformateur (49) reliant les ondulateurs (2 à 11) à un réseau de courant alternatif (13).

12. Procédé selon l'une quelconque des revendications précédentes, **caractérisé en ce que** les sources de courant (30) raccordées aux ondulateurs (2 à 11) comprennent des générateurs, en option des générateurs PV ou des machines électriques avec des éoliennes raccordées ou des moteurs à combustion interne ou des piles à combustible et comprennent des accumulateurs pour énergie électrique, en option des batteries ou des machines électriques avec des masses d'oscillation raccordées ou des accumulateurs d'hydrogène avec piles à combustible réversibles ou avec des combinaisons de piles à combustible et d'hydrolyseurs.
